Europäisches Patentamt

European Patent Office

Office européen des brevets

(19)

(11) Veröffentlichungsnummer: **0 057 903**
**A2**

(12) ## EUROPÄISCHE PATENTANMELDUNG

(21) Anmeldenummer: 82100755.6

(22) Anmeldetag: 03.02.82

(51) Int. Cl.³: **B 23 D 79/02**
**B 29 C 17/12**

(30) Priorität: 07.02.81 DE 3104339

(43) Veröffentlichungstag der Anmeldung:
18.08.82 Patentblatt 82/33

(84) Benannte Vertragsstaaten:
AT BE CH DE FR GB IT LI NL SE

(71) Anmelder: Maurus, Leonhard
Blattergasse 9 1/3
D-8940 Memmingen(DE)

(72) Erfinder: Maurus, Leonhard
Blattergasse 9 1/3
D-8940 Memmingen(DE)

(74) Vertreter: Voigt, Otto, Dipl.-Ing.
Am Pfannenstiel 14
D-8900 Augsburg(DE)

(54) **Verfahren und Vorrichtung zum Entgraten von Schweissnähten.**

(57) Die Erfindung gibt ein Verfahren sowie geeignete Vorrichtungen zum Entgraten von aus Kunststoffprofilen stumpf geschweißten Fenster- und Türrahmen an deren Eckstößen an. Im Gegensatz zu den in Schweißnahtrichtung arbeitenden Werkzeugen nach den Patentanmeldungen P 30 14 139.0 und P 31 02 854.3 werden die Grate der den Stockrahmenecken gegenüberliegenden Ecken quer zur Schweißebene in einem Schneidvorgang abgestochen. Durch Kombination mit den in vorgenannten Patentanmeldungen angegebenen Vorrichtungen ist eine Maschine gebildet, die das vollständige Entgraten eines Eckstoßes ermöglicht.

FIG. 4

EP 0 057 903 A2

Beschreibung:

Die Erfindung betrifft ein Verfahren zum Entgraten der Eckstöße von Rahmen, insbesondere von aus Kunststoffprofilstäben stumpf geschweißten Fenster- und Türrahmen, mit Hilfe eines Abstechwerkzeuges. Ferner gibt die Erfindung vorteilhafte Vorrichtungen zur Ausführung dieses Verfahrens an.

In den deutschen Patenten ........... und ............. (Patentanmeldungen P 30 14 139.0 und P 31 02 854.3) wurden bereits Abstechwerkzeuge zur Beseitigung des Grates an den parallelen Außenflächen der Eckstöße solcher Rahmen offenbart. Zwecks einwandfreier Dichtungsfunktion und Anbrigung von Halterungs- und Bedienungsbeschlägen und nicht zuletzt zur Vermeidung von Staub-

und Schmutzansammlungen müssen aber auch die den Ecken des Stockrahmens gegenüberliegenden Kanten an den Eckstößen des Flügelrahmens sauber entgratet werden.

Die geschah bisher von Hand oder mit einer Vorrichtung geführter Fräswerkzeuge. Beim Fräsen fallen aber Späne und Staub an. Aus ergonomischen Gründen müßten alle diese Bearbeitungsstellen mit Späne- und Staubabsauganlagen ausgestattet sein. Die Fräsbearbeitung erhöht auch den Zeitaufwand und damit die Herstellungskosten des Rahmens.

Mit dem Verfahren gemäß vorliegender Erfindung werden diese Mängel dadurch vermieden, daß der Schweißgrat an den den Stockrahmenecken gegenüberliegenden Ecken des Flügelrahmens quer zur Schweißebene in einem einzigen Schneidvorgang abgestochen wird. Hierbei tritt keine Staubbildung oder Staubentwicklung auf. Die überstehenden Schweißraupen werden vielmehr im Ganzen oder in größeren Teilstücken abgestochen.

Man könnte nun daran denken, die gesamte vieleckige Schweißraupe in einem einzigen Stanzschnitt abzuschneiden. Dies würde aber die Einleitung eines großen Schneiddruckes erfordern, der zu inneren und äußeren Verformungen des Rahmens führen müßte. Außerdem würde sich ein Stanzgrat bilden, der eine weitere Nachbearbeitung erfordert. Vorteilhafter ist demgegenüber ein weiterer Verfahrensschritt gemäß vorliegender Erfindung, demzufolge die einzelnen Schweißgratabschnitte nacheinander ohne bzw. mit nur geringer Unterbrechung des Schneiddruckes abgestochen werden.

Im folgenden wird die Erfindung an einigen Ausführungsbeispielen erläutert. Die zugehörigen Zeichnungen zeigen in

Fig. 1    den Verlauf der in eine Ebene gelegten bzw. geklappten Schneiden in bezug zur Schneidrichtung,

Fig. 2      ein in einem Stück gefertigtes Abstechwerkzeug in der Seitenansicht,

Fig. 3      das Werkzeug nach Fig. 2 in der Ansicht entgegengesetzt zur Schneidrichtung,

Fig. 4      ein aus mehreren geraden Stecheisen gefügtes
Abstechwerkzeug,

Fig. 5      einen schwenkbar gelagerten Abstechkopf mit
Haken- und Schermessern,

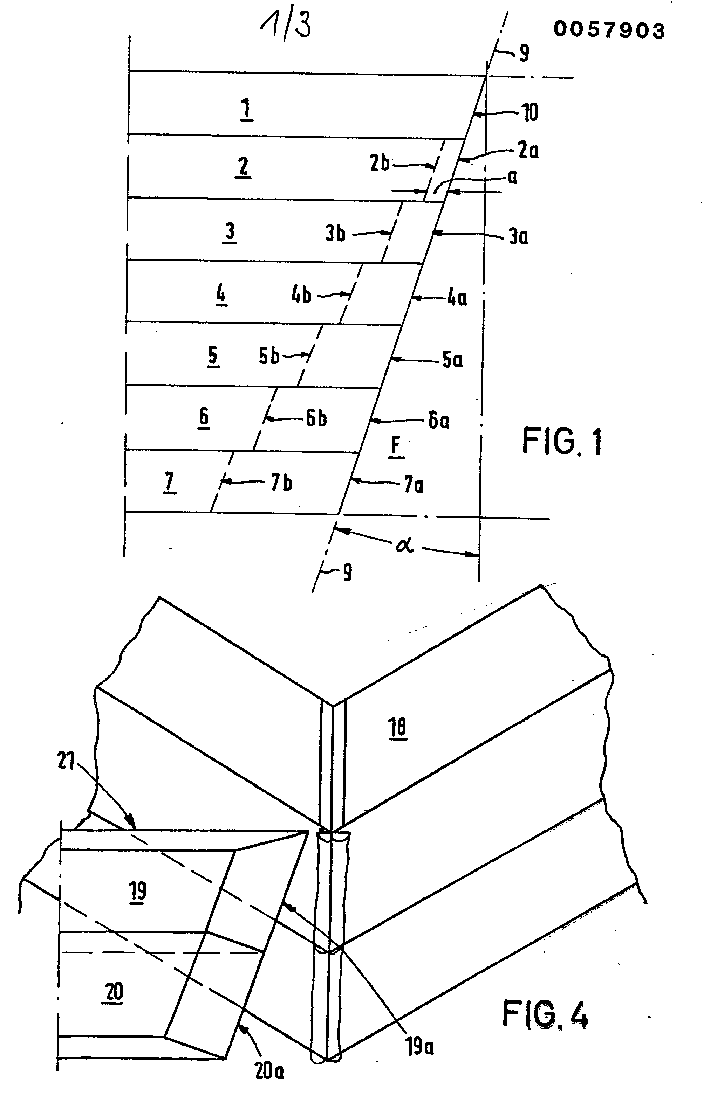

In Fig. 1 bezeichnet F eine Ebene, auf die alle Abstecheisen 1 bis 7 gelegt bzw. umgeklappt sind.
Werden alle Schneiden 1a bis 7a so angeordnet, daß sie
auf der Geraden g unter dem Winkel alpha schräg zur
Schneidrichtung (Pfeil S) liegen, dann werden alle
Schweißgratabschnitte ohne Unterbrechung des Schneiddruckes nacheinander abgestochen.

Für das Anschärfen stumpf gewordener Schneiden empfiehlt
es sich, die Schneiden 2b bis 7b um den Abstand a nach
rückwärts zu versetzen, so daß sie auf parallelen Geraden
schräg zur Schneidrichtung S liegen. Beim Abstechen entstehen dann zwar kurze Unterbrechungen des Schneiddruckes,
die die inneren Ecken schneidenden Teile stumpf gewordener
Schneiden, z.B. 2a, können jedoch ohne Schwierigkeiten
exakt nachgeschliffen werden.

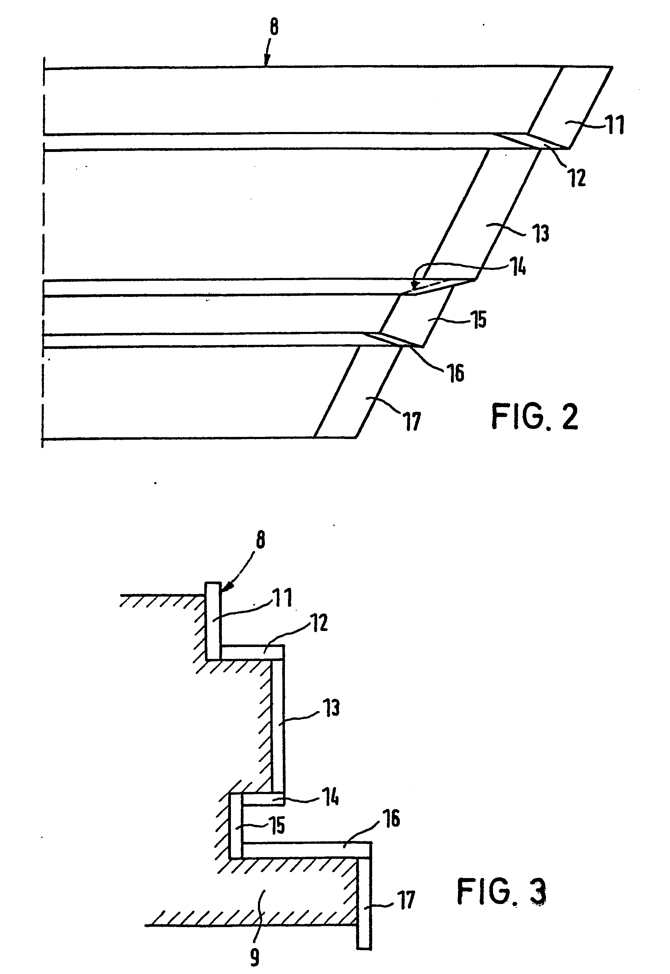

Das in Fig. 2 und 3 gezeigte Abstechwerkzeug 8 ist, z.B.
durch Warmverformung ( Schmieden, Biegen o.dergl.),
Gießen oder Sintern oder auch aus dem Vollen in einem
Stück gefertigt und entsprechend dem Profil 9 geformt.
Mit 11 bis 17 sind die Schneiden bezeichnet, die hier
nach rückwärts versetzt angeordnet sind.

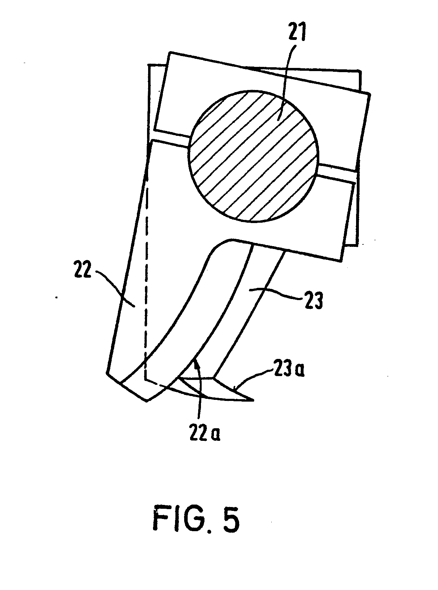

Die Fig. 4 zeigt eine stumpf geschweißte Rahmenecke 18
an deren oberer Fläche der Schweißgrat bereits mit einem
Schneidkopf nach den oben genannten Patenten bzw. Patentanmeldungen abgestochen ist. Das Abstechwerkzeug 21 besteht aus mehreren geraden, durch Schweißen, Hartlöten oder Kleben gefügten Abstecheisen, von denen nur
die beiden oberen 19,2o dargestellt sind. Die Schneiden
19a, 2oa liegen hier, in eine Ebene gelegt bzw. geklappt,
auf einer Geraden (vgl. Fig.1), so daß der Schneiddruck
nicht unterbrochen wird.

In Fig. 5 bezeichnet 21 eine Schwenkachse, auf der mehrere
Messer durch Reibungsschluß befestigt sind, von denen das
Abschermesser 22 und das Hakenmesser 23 gezeigt sind.
Die Schneide 22a hat die Form einer logarithmischen
Spirale, so daß wegen des konstanten Schneidwinkels der
Schneiddruck während des Abschervorganges konstant bleibt.
Die Schneide 23a des Hakenmessers 23 hingegen ist eine
schräg zur Schnittrichtung (Pfeil D) liegende Gerade.
Der Schwenkarm 21 kann von Hand oder pneumatisch, hydraulisch
oder elektrisch betätigt werden.

Theoretisch wäre es denkbar, auch an den beiden parallelen
Außenflächen die Schweißgrate bzw. -raupen durch Abstechen quer zur Schweißebene zu beseitigen. Dies hätte
aber präzise gleiche Höhen der Profilstäbe zur Voraussetzung. Eine solche Präzision ist aber kaum realisierbar.
Aus diesem Grunde sind - nach einer weiteren Ausbildung
der Erfindung - zur Beseitigung dieser Grate in Richtung
der Schweißnaht arbeitende Schneidköpfe nach Fig. 4 bis
6 des Patents ........... (Patentanmeldung P 30 14 139.0)
bzw. Patent .......... (Patentanmeldung P 31 02 854.3)
in der dort erläuterten und gezeigten Weise angeordnet.
Es ist damit eine kombinierte Entgratmaschine gebildet,
mit der ohne zusätzlichen Transport alle Entgratungsarbeiten ausgeführt werden können.

Leonhard Maurus, 8940 Memminger, Blattergasse 9 1/3  0057903
( P - 8166 )    P 31 04 339.9

Verfahren und Vorrichtung zum
Entgraten von Schweißnähten

Patentansprüche:

1. Verfahren zum Entgraten von Schweißnähten an Eckstößen
   von Rahmen, insbesondere von aus Kunststoffprofilstäben
   stumpf geschweißten Fenster- und Türrahmen, mit Hilfe
   eines Abstechwerkzeuges, dadurch gekennzeichnet, daß
   der Schweißgrat an den den Stockrahmenecken gegenüberliegenden Ecken (18) des Flügelrahmens rechtwinklig
   zur Schweißebene in einem einzigen Schneidvorgang abgestochen wird.

2. Verfahren nach Anspruch 1, dadurch gekennzeichnet,
   daß die einzelnen Schweißgratabschnitte nacheinander
   ohne bzw. mit nur geringer Unterbrechung des Schneiddruckes abgestochen werden.

3. Vorrichtung zur Durchführung des Verfahrens nach
   Anspruch 1 oder 2, dadurch gekennzeichnet, daß die in
   einer Ebene geklappten Schneiden (1a bis 7a) auf einer
   zur Schneidrichtung schräg (Schneidwinkel alpha) verlaufenden Geraden (g) liegen (Fig. 4).

4. Vorrichtung zur Durchführung des Verfahrens nach Anspruch 1 oder 2, dadurch gekennzeichnet, daß die in
   einer Ebene geklappten Schneiden (2b bis 7b) auf zur
   Schneidrichtung schräg (Schneidwinkel alpha) und in
   geringen Abständen (a) verlaufenden parallelen Geraden
   liegen.

5. Vorrichtung nach Anspruch 3 oder 4, dadurch gekennzeichnet, daß das Abstechwerkzeug (8) aus einem Stück
   gefertigt ist.

- 2 -

0057903

6. Vorrichtung nach Anspruch 3 oder 4, dadurch gekennzeichnet, daß das Abstechwerkzeug aus einzelnen, in der Form des zu bearbeitenden Profils angeordneten Abstecheisen besteht, die unter Anwendung bekannter Fügetechniken (z.B. Schweißen, Löten, Kleben) zusammengefügt sind.

7. Vorrichtung nach Anspruch 3 oder 4, dadurch gekennzeichnet, daß das Abstechwerkzeug aus Haken- und Schermessern (23,22) zusammengesetzt ist, die vorzugsweise an einer schwenkbaren Welle (21) befestigt sind.

8. Vorrichtung nach einem der Ansprüche 3 bis 7, dadurch gekennzeichnet, daß zum Abstechen der Grate an den parallelen Außenflächen in Richtung der Schweißnaht arbeitende Schneidköpfe nach den Patenten .......... und .......... (Patentanmeldungen P 30 14 139.0 und P 31 02 854.3) angeordnet sind.

1/3    0057903

FIG. 1

FIG. 4

FIG. 2

FIG. 3

FIG. 5